Europäisches Patentamt

(19) European Patent Office

Office européen des brevets

(11) Numéro de publication : **0 276 195 B1**

(12) **FASCICULE DE BREVET EUROPEEN**

(45) Date de publication du fascicule du brevet :
23.10.91 Bulletin 91/43

(51) Int. Cl.⁵ : **B23H 7/02, B23H 7/04**

(21) Numéro de dépôt : **88810010.4**

(22) Date de dépôt : **12.01.88**

(54) **Dispositif et procédé pour prévenir la rupture d'un fil métallique.**

(30) Priorité : **13.01.87 CH 95/87**

(43) Date de publication de la demande :
**27.07.88 Bulletin 88/30**

(45) Mention de la délivrance du brevet :
**23.10.91 Bulletin 91/43**

(84) Etats contractants désignés :
**DE FR GB**

(73) Titulaire : **CHARMILLES TECHNOLOGIES S.A.
8-10, rue du Pré-de-la-Fontaine Zone
industrielle de Satigny
CH-1217 Meyrin 1 (CH)**

(72) Inventeur : **Demellayer, René
Monchoisy 20
CH-1207 Geneve (CH)**

(74) Mandataire : **Hugelin, Christiane
c/o CHARMILLES TECHNOLOGIES SA Case
postale 373
CH-1217 Meyrin 1 (CH)**

## Description

La présente invention a trait à un dispositif et à un procédé pour prévenir la rupture d'un fil métallique défilant entre deux organes de guidage. Un tel dispositif se révèle plus particulièrement utile dans le domaine de l'électroérosion, pour des machines à découper munies d'un fil électrode.

En effet, le fil-électrode d'une machine à découper par électroérosion est soumis à une usure importante lors de son passage dans la zone d'usinage. Cette usure est due à l'étincelage intensif subi par le fil dans cette zone et également aux frottements sur le guide et le contact d'amenée du courant situés en amont, cet effet étant encore augmenté du fait de l'échauffement du fil parcouru par le courant électrique d'usinage et de la tension mécanique qui lui est appliquée.

La surface du fil devient de plus en plus rugueuse ce qui entraine une augmentation des frottements sur le guide et le contact d'amenée du courant situés en aval. De plus, sa section se modifie asymétriquement d'un point à un autre de sa longueur. Il s'agit en générale d'un amincissement du fil, ce qui augmente son échauffement par effet Joule et, ainsi que la modification de son état de surface, a pour conséquence une réduction importante de sa résistance mécanique. Comme décrit dans le brevet GB 2045671, ces diminutions de diamètre locales sont accompagnées d'excroissances qui apparaissent sur leurs bords et débordent parfois largement de la section originale du fil. Ces excroissances "accrochent" sur le guide-fil aval et provoquent des déviations latérales du fil ce qui augmente le risque de court-circuits et donc, pour ces deux raisons, les probabilités de rupture du fil.

Depuis longtemps, en examinant le fil sortant en aval de la zone d'usinage, les praticiens de l'électroérosion savent prévoir une probable rupture du fil en observant l'augmentation de sa rugosité et de la striction de son diamètre qui sont en général reconnaissables à l'oeil nu. Il est connu qu'il y a intérêt, dès que le fil prend un certain aspect, à réduire la fréquence des décharges électriques afin d'éviter la rupture.

Cette rugosité du fil augmente au cours de l'usinage, bien que le fil passant dans la zone d'usinage soit renouvelé constamment et que les paramètres d'usinage restent constants et aient été choisis au départ de façon à obtenir une importante érosion de la pièce et une faible érosion du fil. En effet, les conditions de l'usinage se dégradent au cours de temps du manière imprévisible. Ainsi, des filtres peuvent se boucher, des pompes devenir moins efficaces, changeant ainsi les caractéristiques du fluide diélectrique dans lequel baignent la pièce à usiner et le fil-électrode. Des fuites peuvent se produire qui abaissent l'efficacité des buses injectant le liquide d'usinage, ce qui a pour conséquence une perte de pression, donc une mauvaise évacuation des particules métalliques érodées et un mauvais refroidissement du fil-électrode. Il est donc souhaitable de pallier cette dégradation de l'usinage et cette usure anormale et irrégulière du fil.

C'est pourquoi on a essayé, de façon moins empirique, de détecter automatiquement l'état de détérioration du fil laissant prévoir sa rupture prochaine, en mesurant la variation d'une caractéristique physique du fil suite à son passage dans la zone d'usinage. Ainsi, certains des procédés connus font appel à un contrôle de l'usure du fil au cours de l'usinage, par exemple en suivant l'augmentation de la rugosité par voie optique, en particulier en mesurant la réflexion spéculaire (demande de brevet japonaise publiée sous le numéro 54-71496), ou par voie mécanique, au moyen d'un palpeur (demande de brevet japonaise publiée sous le no 59-219119). Mais ces méthodes ne tiennent pas compte du mouvement de vrille du fil qui a pour effet de modifier continuellement l'orientation de la zone dégradée et perturbe ainsi les mesures de contrôle.

D'autre méthodes connues consistent à suivre la diminution de la section du fil en mesurant sa résistivité (demande de brevet japonaise publiée sous le numéro 59-102529) ou ses caractéristiques magnétiques (demande de brevet japonais publiée sous le numéro 60-29222).

Cependant, comme les variations de résistivité et d'effets magnétiques peuvent être aussi provoquées par une variation de la température du fil et non par une modification de sa section, l'interprétation des résultats de ces mesures reste très incertaine, et ne permet pas de prévoir et de prévenir efficacement la rupture du fil.

La présente invention a pour objet un dispositif destiné à éviter la rupture d'un fil métallique défilant sous tension entre deux organes de guidage, en particulier dans le cas d'un fil-électrode tendu entre les deux têtes d'usinage d'une machine à découper par électroérosion et parcouru par le courant d'usinage. Grâce à ce dispositif, on peut suivre la progression de l'usure du fil en mesurant au cours du temps la variation de sa section à la sortie de la zone d'usinage. Selon le dispositif de la présente invention, le fil passe à travers un organe du type des bagues à gicleurs ou d'une jauge à fuites munie d'au moins un canon ou d'une jauge pneumatique de calibrage, disposé par exemple à la sortie de la zone d'usinage d'une machine EDM, ce qui permet de mesurer les fuites d'un fluide injecté sous pression, soit entre fil et canon ou fil et bague, soit à la sortie d'orifices calibrés ou de palpeurs disposés de part et d'autre du fil.

Ce dispositif est également agencé de façon à modifier automatiquement, dès que cette mesure atteint un seuil donné, au moins l'un des paramètres d'usinage dont la variation est apte à diminuer l'usure du fil.

La présente invention a également trait à un procédé mettant en oeuvre le dispositif défini ci-dessus.

Par "canon" on entend un orifice calibré disposé à la sortie d'un boitier étanche.

Par "mesurer les fuites" on entend "mesurer la pression ou le débit" du fluide passant à travers le canon ou la bague ou entre les orifices calibrés ou les palpeurs disposés de part et d'autre du fil. Ce fluide peut être un gaz ou un liquide. En électroérosion il s'agit de préférence du liquide diélectrique d'usinage, mais on peut aussi utiliser de l'air ou un autre gaz. Grâce à un circuit électronique, on peut, par exemple, comparer à chaque instant chaque mesure à une valeur de référence et faire varier au moins un paramètre d'usinage défini ci-dessous de façon à ramener l'écart entre la mesure et la valeur de référence au-dessous d'un seuil donné. On peut également effectuer simultanément une mesure en amont de la zone d'usinage et comparer l'écart entre les deux mesures obtenues respectivement en amont et an aval à un écart de référence, puis, dès qu'il atteint on dépasse cette valeur de référence, agir sur un paramètre d'usinage approprié de manière à ramener cet écart au-dessous de la valeur de référence. Ces seuils, écarts et valeurs de référence peuvent être déterminés expérimentalement ou par calcul théorique.

Le temps de réponse de ces mesures est très faible. L'apparition d'une usure anormale peut en général être décelée en moins de quelques dixièmes de seconde. Le retour à des conditions d'usure normales se fait en général en moins de quelques secondes.

On choisit de préférence un paramètre d'usinage sur lequel on peut agir rapidement, et dont la variation fait diminuer rapidement l'usure du fil. Le paramètre peut être également la vitesse de défilement du fil, c'est-à-dire la durée de son passage à travers la zone d'usinage, ou encore sa tension entre les organes de guidage ou bien l'une des caractéristiques de l'injection du liquide d'usinage. En électroérosion on agit de préférence sur la puissance des décharges électriques, en particulier sur leur fréquence ou leur intensité. On peut également agir sur le régime d'usinage en modifiant aussi le temps d'attente des impulsions, la durée ou la fréquence des étincelles, la tension aux bornes du générateur, ou encore commander une série de courtes coupures des impulsions.

Les mesures ainsi effectuées selon le dispositif et le procédé de la présente invention donnent une indication fiable de la diminution de la section moyenne du fil et donc de son degré d'usure.

Contrairement aux différents dispositifs et procédés proposés dans l'état de la technique, la présente invention permet de détecter avec précision l'apparition d'un processus d'usure anormale du fil, et ceci quelles que soient l'orientation et la température de ce dernier.

Le dispositif de la présente invention peut présenter de nombreuses formes d'exécution. Seules certaines seront illustrées schématiquement, et à titre d'exemple, par le dessin annexé.

La figure 1 est une coupe longitudinale d'une jauge à fuite pouvant être utilisée dans un dispositif selon la présente invention.

La figure 2 schématise un circuit dans lequel un dispositif selon la présente invention permet de mesurer la pression du fluide traversant le canon monté à la sortie d'une jauge à fuites disposée en aval de la zone d'usinage d'une machine EDM à découper.

La figure 3 représente un circuit dans lequel un dispositif selon la présente invention permet de mesurer le débit du fluide traversant le canon placé à la sortie d'une jauge à fuites disposée en aval de la zone d'usinage d'une machine EDM à découper.

La figure 4 schématise un circuit dans lequel un dispositif selon la présente invention permet d'effectuer simultanément deux mesures, l'une en amont et l'autre en aval de la zone d'usinage d'une machine EDM à découper.

La figure 5 est une coupe longitudinale d'une jauge à fuites différente de celle schématisée à la figure 1 et pouvant être également utilisée dans un dispositif selon la présente invention.

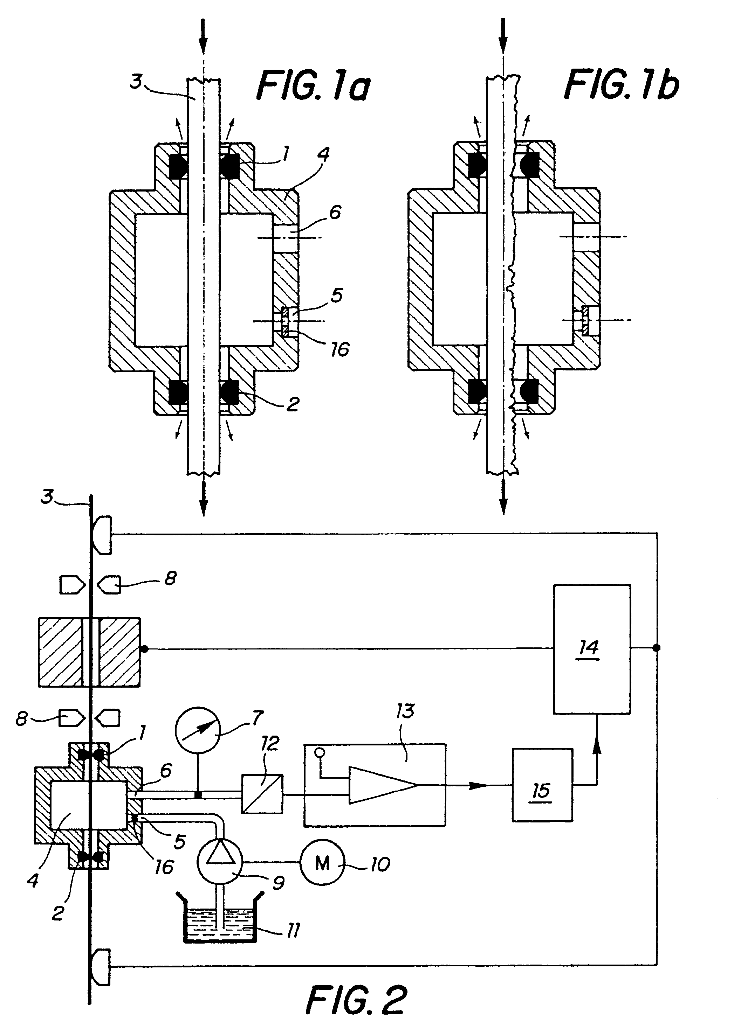

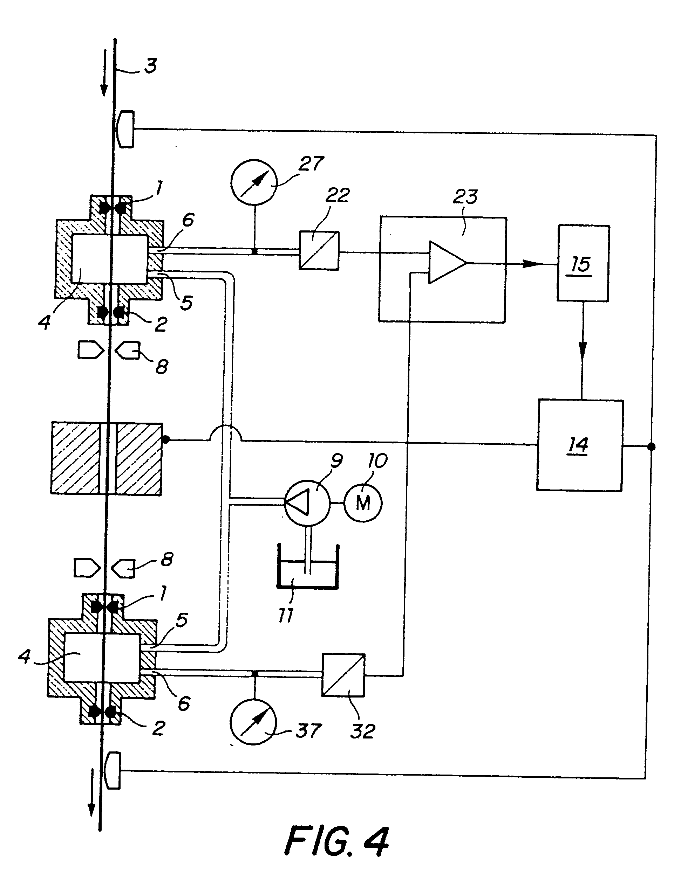

La jauge à fuites représentée à la figure 1 comporte deux canons 1 et 2 présentant un diamètre de quelques dixièmes de millimètres, de préférence légèrement supérieur, par exemple de quelques microns, au diamètre du fil 3 dont on veut suivre l'usure. Ils sont réalisés en diamant ou en saphir, ou dans une autre matière dure, telles certaines céramiques, non déformable et résistant aux frottements. Ils sont montés dans deux orifices ménagés aux deux extrémités d'un boitier étanche 4, et permettant au fil 3 de traverser la jauge. Du liquide est injecté sous pression dans le boitier 4 grâce au canal 5 percé sur le côté du boitier 4. Un autre canal 6 permet de monter sur ce boitier 4 soit un manomètre, soit un débitmètre ou un fuitomètre. Le canal 5 est muni d'un diaphragme 16 destiné à diminuer le débit à l'entrée de la jauge, afin de pouvoir rendre plus sensibles les variations de pression ou de débit mesurées par ce manomètre ou ce débitmètre. Ce diaphragme peut être placé, comme indiqué à la figure 1, dans la paroi du boitier 4, mais il peut également être situé à un autre endroit dans le canal 5, entre l'orifice ménagé dans le boitier 4 et l'emplacement où est branché le manomètre ou le débitmètre.

La figure 2 représente un dispositif permettant de réguler les paramètres d'usinage, par exemple la puissance des décharges électriques, lors d'un usinage par électroérosion, en mesurant la pression régnant dans le boitier 4 d'une jauge à fuites telle que celle décrite en référence à la figure 1 et placée sur le fil-électrode 3 à la sortie de la zone d'usinage, c'est-à-dire sur ou à proximité du guide-fil aval 8. C'est un manomètre 7 qui est relié à la jauge à fuites par le canal 6. L'organe de pompage 9 actionné par le moteur 10 permet de prélever le liquide d'usinage hors du réservoir 11 et de l'injecter sous pression dans le boitier 4 par le canal 5. Le transducteur 12 traduit la mesure de pression effectuée par le manomètre 7 en une grandeur électrique. Le comparateur 13, monté entre ce transducteur 12 et la commande numérique 15 de la machine EDM, compare cette grandeur électrique à une valeur de référence prédéterminée. Si cette dernière est atteinte ou dépassée, il émet et amplifie un signal qu'il envoie vers la commande numérique 15, elle-même reliée au générateur d'impulsions 14 de la machine EDM.

Nous allons décrire le fonctionnement de ce dispositif en référence aux figures 1 et 2. Il suffit de mesurer la pression à l'intérieur du boitier 4, au début du cycle d'usinage, lorsque le fil 3 ne présente pas encore d'usure anormale, pour connaître les conditions correspondant à un fil non usé et à la jauge et au fluide d'usinage utilisés (Figure 1a). L'organe de pompage 9 est agencé de manière à injecter ce fluide à débit constant, tandis que le manomètre 7 effectue des mesures successives de la pression règnant dans le boitier 4. Ces mesures indiquent que la pression diminue au cours du temps, cette baisse de pression étant dûe à une augmentation des fuites aux orifices 1 et 2 par suite d'une diminution de la section du fil 3, et donc d'une augmentation de son usure (figure 1b).

Dès que la baisse de pression atteint un seuil prédéterminé, (qui est un indice significatif que le fil 3 commence à être usé à un degré tel qu'il va risquer de casser), un signal est émis par le comparateur 13, déclenchant automatiquement l'envoi au générateur 14 d'un ordre de la commande numérique 15, lui commandant par exemple une diminution de la fréquence ou de l'intensité des décharges électriques, ou une autre modification d'un paramètre apte à faire diminuer rapidement l'usure du fil. La commande 15 peut également agir sur plusieurs paramètres d'usinage.

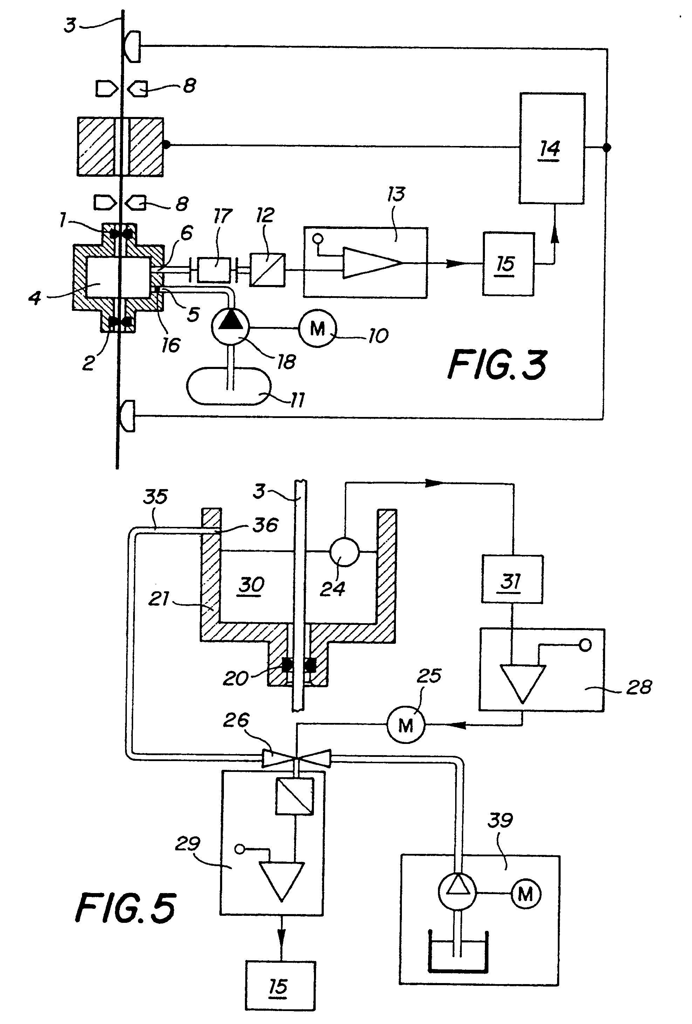

La figure 3 représente un dispositif permettant de réguler les paramètres d'usinage, par exemple la puissance des décharges électriques lors d'un usinage par électroérosion en mesurant le débit du fluide traversant le boitier 4 d'une jauge à fuites telle que celle décrite en référence à la figure 1 et placée sur le fil électrode 3 à la sortie de la zone d'usinage comme décrit précédemment en référence à la figure 2.

C'est un débimètre 17 qui est relié à la jauge par le canal 6. Le dispositif comporte une station de pompage (18, 10, 11) du type de celle décrite plus haut. Le transducteur 12 traduit la mesure de débit effectuée par le débitmètre 17 en une grandeur électrique. Le comparateur 13 joue le même rôle que dans le dispositif décrit ci-dessus.

Nous allons décrire le fonctionnement de ce dispositif en nous référant aux figures 1 et 3. Il suffit de mesurer le débit du fluide circulant de l'orifice d'amenée 5 à l'orifice aval 2 ou amont 1 de la jauge illustrée à la figure 1, au début du cycle d'usinage, pour connaître le débit correspondant à un fil non usé de diamètre donné, ainsi qu'à la jauge et au fluide d'usinage utilisés (Figure 1a). L'organe de pompage 18 est agencé de manière à injecter le fluide à pression constante tandis que le débitmètre 17 effectue des mesures successives du débit du fluide traversant la jauge à fuites. Ces mesures indiquent que le débit augmente au cours du temps, cette augmentation étant due, comme expliqué plus haut, à une augmentation des fuites aux orifices 1 et 2 par suite d'une augmentation de l'usure du fil 3 (figure 1b).

Dès que cette augmentation de débit atteint un seuil critique prédéterminé, un signal est émis par le comparateur 13, déclenchant automatiquement un abaissement de la puissance des décharges électriques, par exemple, ou la modification d'un ou de plusieurs autres paramètres diminuant l'usure du fil.

Au lieu d'être émis lorsque la pression ou le débit varient au-delà d'une valeur de référence prédéterminée, le signal peut également être émis lorsque l'augmentation du débit ou la diminution de la pression s'accélèrent au cours du temps avant d'atteindre ce seuil, ce qui est le signe d'une accélération de l'usure du fil suite à une dégradation des conditions d'usinage.

La figure 4 illustre un dispositif dans lequel deux jauges à fuites telles que celle décrite à la figure 1, sont disposées de part et d'autre de la zone d'usinage, ce qui permet de comparer le degré d'usure du fil en amont et en aval de la zone d'usinage. Un manomètre (27 et 37) est monté sur chacune des jauges. La station de pompage 9, du même type que celle décrite plus haut en référence à la figure 2, est reliée au canal 5 de chacune des jauges et agencé de manière à injecter le fluide d'usinage à débit constant, tandis que chacun des manomètres 27 et 37 effectue simultanément des mesures de la pression interne règnant dans chacun des boitiers 4. Ces deux mesures sont traduites en grandeurs électriques par les transducteurs 22 et 32 reliés chacun à l'un des manomètres 27 et 37, ainsi qu'à un comparateur 23. Ce dernier comporte un ampli différentiel agencé de façon à comparer les deux grandeurs électriques transmises par chacun des transducteurs 22 et 32 et à émettre un signal vers la commande numérique 15 de la machine EDM dès que l'écart entre ces deux grandeurs atteint ou dépasse une valeur de référence. Cette dernière a été prédéterminée de façon à être significative d'une accélération de l'usure du fil (et donc d'une dégradation des conditions d'usinage et d'un risque de cassure du fil). La commande numérique 15 transmet alors l'ordre au générateur d'impulsion 14 de la machine EDM de diminuer la puissance des décharges électriques, par exemple, ou de modifier un autre ou plusieurs autres paramètres diminuant l'usure du fil.

Il est bien entendu que les formes d'exécution décrites ci-dessus ne présentent aucun caractère limitatif. On notera en particulier que des jauges à fuites d'un type différent de celle décrite en référence à la figure 1 peuvent être avantageusement utilisées dans un dispositif selon la présente invention, par exemple des organes du type des bagues à gicleurs ou des jauges telles que celle représentée à la figure 5.

Cette jauge ne présente qu'un seul canon 20 situé en aval. Elle est constituée par un récipient 21 retenant un certain volume de fluide 30. Un flotteur 24 relié à une jauge de niveau 31 permet de mesurer le niveau de ce fluide. Un moteur 25 actionnant une valve 26 est commandé par un signal émis par un comparateur 28 en réponse à l'écart entre la mesure du niveau et une valeur de référence de ce niveau. Grâce à cette valve 26, disposée sur le canal d'amenée de fluide 35 débouchant dans le récipient 21 par l'orifice 36, entre cet orifice et une station de pompage 39 du fluide (par exemple du type de celle décrite en référence aux figures 2 à 4), un niveau constant est maintenu dans le récipient 21. La position de cette valve 26 est une mesure des fuites entre le fil 3 et le canon 20, c'est-à-dire qu'elle permet d'évaluer et de suivre la variation de la section du fil 3. La position de la valve 26 est comparée à une valeur de référence par le comparateur 29, auquel peuvent, par exemple, être incorporés un débitmètre et un transducteur hydraulicoélectrique. Cette dernière est déterminée, par exemple, expérimentalement en début d'usinage, pour un fil non usé. Lorsque cet écart atteint ou dépasse un seuil prédéterminé, le comparateur 29 émet et amplifie un signal vers l'unité de commande numérique 15 afin que cette dernière commande la modification d'au moins un paramètre d'usinage apte à réduire l'usure du fil 3. Une jauge de ce type peut, par exemple, être utilisée dans le cas d'un usinage réalisé avec une lubrification par aspersion.

Au lieu d'utiliser des jauges à fuites ou des bagues à gicleurs on peut utiliser des palpeurs suiveurs constitués, en particulier, par un vérin pneumatique à membrane portant à l'extrémité de son axe une buse pneumatique. Les déplacements du vérin correspondent aux variations de la surface contrôlée qui sont mesurées, par exemple, par un capteur de déplacement à transformateur différentiel fixé à l'arrière des palpeurs. On dispose, de préférence, au moins deux de ces palpeurs, symétriquement de part et d'autre du fil, perpendiculairement à l'axe de ce dernier. Ils permettent d'effecteur les mesures sans autre contact avec le fil que celui du jet d'air à très basse pression issu de la buse pneumatique.

Par ailleurs, le transducteur n'est pas forcément placé entre le manomètre ou le débitmètre et le comparateur, comme montré aux figures 2 à 4. Il peut aussi être placé après ce dernier, de façon à transformer en grandeur électrique le résultat de la comparaison effectuée, soit entre le débit ou la pression mesurés et une valeur de référence, soit entre deux mesures simultanées de pression ou de débit, de façon à émettre un signal vers l'unité de commande 15.

Les dispositifs tels que ceux décrits ci-dessus ont non seulement comme avantages d'être précis, de pouvoir être montés immédiatement à la sortie de la zone d'usinage, de présenter des temps de réponse brefs et de permettre une évaluation fiable du degré d'usure du fil sans que les mesures soient perturbées par le vrillage du fil autour de son axe et par son échauffement, mais aussi celui d'être simples, peu coûteux et de pouvoir être montés très facilement sur des machines EDM existantes.

En effet, les organes de mesures utilisés dans la présente invention pourraient, par exemple, être incorporés dans les guides-fil existants, ou encore sur les buses d'injection du fluide d'usinage déjà incorporées aux têtes d'usinages des machines EDM actuelles.

Grâce à eux on peut prévoir efficacement une rupture prochaine du fil par suite de la dégradation des conditions d'usinage et empécher rapidement et automatiquement cette rupture en modifiant un ou plusieurs paramètres d'usinage. La durée de fonctionnement automatique et la productivité de la machine EDM sont ainsi sensiblement augmentées, car l'intervention d'un opérateur ou la mise en action d'un dispositif de réenfilage automatique du fil n'est plus nécessaire, et les arrêts dûs à une cassure du fil sont évités.

De plus, comme il n'y a pas de contact direct entre les canons des jauges à fuites, les bagues à gicleurs ou les palpeurs et le fil, l'organe de mesure n'intervient pas dans la grandeur mesurée. Comme les dispositifs selon la présente invention n'exercent aucun frottement sur le fil, ils ne sont à l'origine d'aucune usure supplémentaire. Les mesures peuvent être effectuées en continu sans inconvénients.

Les dispositifs de la présente invention permettent donc de régler en cours d'usinage les paramètres conditionnant ce dernier, et de l'optimiser en maintenant un bon usinage, avec le meilleur rendement possible, mais sans risquer de casser le fil par suite de décharges électroérosives trop puissantes par exemple, et en choisissant le régime d'usinage le plus approprié.

Ajoutons encore qu'il est d'autant plus utile d'évaluer le dégré d'usure d'un fil utilisé comme électrode en électroérosion, que ce fil est de plus en plus souvent un fil stratifié composé de plusieurs couches de métaux et, éventuellement, d'alliages et d'oxydes métalliques. Il est donc très important de prévoir ou de détecter et de pallier par une modification rapide des paramètres d'usinage, la disparition par usure de la couche superficielle d'un fil stratifié, car on évite ainsi une dégradation brutale de l'usinage.

## Revendications

1. Dispositif pour éviter la rupture d'un fil métallique défilant sous-tension entre deux têtes de guidage, agencé pour évaluer l'usure de ce fil en suivant la variation au cours du temps de sa section à la sortie d'une zone d'usinage, comportant soit au moins un canon (1, 2) ou une bague à gicleurs dans lesquels passe le fil (3), soit au moins deux orifices calibrés ou deux palpeurs disposés symétriquement de part et d'autre du fil, ces organes étant disposés à la sortie de la zone d'usinage, des moyens pour injecter un fluide sous pression à travers ce canon, cette bague ou ces orifices ou dans ces palpeurs, des moyens (7, 12) pour mesurer les fuites de ce fluide soit entre fil et canon ou bague ou à la sortie de ces orifices calibrés ou de ces palpeurs, au moins un comparateur (13) comparant soit cette mesure ou une grandeur électrique dérivé de cette mesure à une valeur de référence prédéterminée, soit deux mesures simultanées, on deux grandeurs dérivées de ces deux mesures, entre elles, au moins un appareil (15) envoyant un signal apte à agir automatiquement sur au moins un paramètre d'usinage dès que les mesures ou les grandeurs dérivées de ces mesures atteignent ou dépassent la valeur de référence, ou dès que l'écart entre deux mesures simultanées atteint ou dépasse un seuil donné.

2. Dispositif selon la revendication 1, comportant au moins un transducteur (12) traduisant en grandeur électrique les mesures des fuites ou les écarts entre ces mesures et une valeur de référence, ou entre deux mesures simultanées.

3. Dispositif selon la revendication 1 comportant une jauge à fuites (4) munie de deux canons à travers lesquels passe le fil (3) et disposée à la sortie de la zone d'usinage.

4. Dispositif selon la revendication 3 dans lequel les moyens (9) pour injecter le fluide sont agencés pour l'injecter à débit constant, tandis que les moyens pour mesurer les fuites de ce fluide sont constitués par un manomètre (7) mesurant la pression régnant dans la jauge (4).

5. Dispositif selon la revendication 3 dans lequel les moyens (18) pour injecter le fluide sont agencés pour l'injecter à pression constante, tandis que les moyens pour mesurer les fuites de ce fluide sont constitués par un débitmètre (17) mesurant le débit du fluide circulant à travers la jauge (4).

6. Dispositif selon l'une des revendications 2 à 5, comportant une seconde jauge à fuites (4) munie de deux canons (1, 2) à travers lesquels passe le fil (3) et disposée à l'entrée de la zone d'usinage, des moyens (9) pour injecter un fluide sous pression dans cette jauge (4), des moyens (27, 37) pour mesurer les fuites de fluide dans cette jauge simultanément à celles dans la première jauge et un deuxième transducteur (32) relié au comparateur (23).

7. Dispositif selon l'une des revendications 1 à 6, dans lequel le canon, la bague, l'orifice calibré ou le palpeur est disposé à la sortie de la zone d'usinage d'une machine à découper par électroérosion avec un fil électrode, autour ou de part et d'autre de ce fil électrode.

8. Dispositif selon la revendication 7 dans lequel le signal émis est apte à diminuer la puissance des décharges électriques produites par le générateur d'impulsions (14) de la machine EDM.

9. Dispositif selon la revendication 1 dans lequel le signal émis est apte à agir sur la tension mécanique ou sur la vitesse de défilement du fil c'est-à-dire son temps de passage dans la zone d'usinage.

10. Dispositif selon la revendication 8, dans lequel le signal émis est apte à diminuer le fréquence ou l'intensité des décharges électriques produites par le générateur d'impulsions (14) de la machine EDM.

11. Procédé pour éviter la rupture d'un fil métallique (3) défilant sous tension entre deux têtes de guidage (8), dans lequel on évalue l'usure de ce fil en suivant la variation au cours du temps de sa section à la sortie d'une zone d'usinage, caractérisé par le fait que le fil passe dans au moins un canon (1, 2) ou au moins une bague à gicleurs ou entre au moins deux orifices calibrés ou deux palpeurs disposés symétriquement de part et d'autre du fil, ces organes étant disposés à la sortie de la zone d'usinage, qu'on mesure les fuites entre fil et canon ou bague, ou à la sortie de ces orifices ou palpeurs, d'un fluide injecté sous pression dans ce canon, cette bague, ces orifices ou ces palpeurs et qu'on agit sur au moins un paramètre d'usinage dès que les mesures ou l'écart entre deux de ces mesures simultanées, atteignent ou dépassent une valeur de référence prédéterminée indiquant que la variation de la section et donc l'usure du fil atteignent un seuil donné.

12. Procédé selon la revendication 11 dans lequel la zone d'usinage est immergée dans un liquide.

## Claims

1. A device for preventing the breaking of a stretched metal wire passing between two guide heads, provided with means for evaluating the wear on said wire by monitoring the variation with time of a cross-section of the wire at the outlet of a machining zone, said device comprising, at

said outlet of said machining zone, either at least one barrel (1, 2) or one ring with jets in which the wire (3) passes, or at least two calibrated openings or two sensors arranged symmetrically on either side of the wire ;

means for injecting a fluid under pressure through said barrel, said ring, said openings or said sensors,

means (7, 12) for measuring outflows of said fluid either between said wire and barrel or ring or at the outlet of said calibrated openings or said sensors,

at least one comparator (13) for comparing either said measurement or an electrical variable derived from said measurement to a predetermined reference value, or for comparing with one another, two simultaneous measurements or two variables derived from said measurements

at least one apparatus (15) for sending a signal for automatically controlling at least one machining parameter, as soon as said measurements or said variables derived therefrom reach or surpass said reference value, or as soon as the difference between two said simultaneous measurements reaches or surpasses a reference threshold.

2. The device as claimed in claim 1, having at least one transducer (12) for converting into electrical variable said outflow measurements or said differences between said measurements and a reference value, or between two said simultaneous measurements.

3. The device as claimed in claim 1, having a first outflow gauge (4) equipped with two barrels through which said wire (3) passes and arranged at said outlet of said machining zone.

4. The device as claimed in claim 3 in which the means (9) for injecting the fluid are arranged for injecting it at a constant flow rate, said means for measuring outflows of said fluid comprise a manometer (7) measuring the pressure prevailing in said gauge (4).

5. The device as claimed in claim 3 in which said means (18) for injecting said fluid are arranged for injecting it at a constant pressure, said means for measuring the outflows of said fluid comprise a flowmeter (17) measuring the flow of fluid circulating through said first gauge (4).

6. The device as claimed in one of claims 2 to 5, having

— a second outflow gauge (4) equipped with two barrels (1, 2) through which said wire (3) passes and arranged at the inlet of the machining zone

— means (9) for injecting fluid under pressure in said second gauge (4),

— means (27, 37) for measuring the outflows of fluid in said second gauge simultaneously with the outflows of fluid in said first gauge and a second transducer (32) connected with said comparator (23).

7. Device as claimed in one of claims 1 to 6, in which the barrel, the ring, the calibrated openings or sensors are arranged at the outlet of the machining zone of a wire cutting machine by electroerosion, around or here and there of the wire electrode.

8. Device as claimed in claim 1 in which the signal delivered is suitable for decreasing the power of the electrical discharges produced by the pulse generator (14) of the EDM machine.

9. Device as claimed in claim 1 in which the signal delivered is suitable for acting on the stretching strength or on the unthreading speed of the wire, that is its time of passage in the machining zone.

10. Device as claimed in claim 8 in which the signal delivered is suitable for decreasing the frequency or the intensity of the electrical discharges produced by the pulse generator (14) of the EDM machine.

11. Process for preventing the breaking of a stretched metal wire (3) passing between two guide heads (8), in which the wear on said wire is evaluated by monitoring the variation with time of a cross-section of the wire at the outlet of a machining zone, characterized by the fact

— that the wire passes into at least one barrel (1, 2) or at least one ring with jets or between at least two calibrated openings or two sensors arranged symmetrically here and there of the wire, these elements being arranged at the outlet of the machining zone

— that the outflows are measured, between wire and barrel or ring, or at the outlet of said openings or sensors, of a fluid injected under pressure in said barrel, ring, or between said openings or sensors, and

— that at least ont machining parameter is acted on when the measurements or the deviation between two simultaneous of said measurements reach or surpass a predetermined reference value indicating that the variation in the cross-section and thus the wear on the wire are reaching a given threshold.

12. Process as claimed in claim 11 in which the machining zone is immersed in a liquid.

**Patentansprüche**

1. Vorrichtung zum Vermeiden des Bruches eines sich zwischen zwei Führungsköpfen ablaufenden, gespannten Metalldrahtes, indem seinen Verschleiss durch Folgen des zeitbedingten Wechsels seines Querschnittes, am Ausgang der Arbeitszone, abgeschätzt wird, worin

— entweder mindestens ein Rohr (1, 2) oder ein mit Düsen versehener Ring, welche vom Draht (3) durchgedrungen werden, oder mindestens zwei, beiderseits des Drahtes symmetrisch angeornete, kalibrierte Oeffnungen oder Taster, am Ausgang der Arbeitszone vorgesehen sind, sowie

— Injektioneinrichtungen zum Spritzen einer unter Druck stehenden Flüssigkeit durch dieses Rohr, diesen Ring, diese Oeffnungen oder Taster
— Messmittel (7, 12) zum Mass der Lecken dieser Flüssigkeit entweder zwischen Draht und Rohr oder Ring, oder am Ausgang dieser kalibrierten Oeffnungen oder Taster,
— mindestens ein Komparator (13) zum Vergleich entweder dieses Messwertes oder einer sich davon herleitenden elektrischen Grösse mit einem Referenzwert, oder zum miteinander Vergleich zwei gleichzeitig erhaltener Messwerten oder zwei sich davon herleitender elektrischen Grösse, und
— mindestens ein Signalgeber (15) zur automatischen Wirkung auf mindestens einem Arbeitsparameter, sobald diese Messwerte oder die sich davon herleitende elektrische Grösse an diesem Referenzwert heranreichen oder ihn überschreiten, oder sobald der Abstand zwischen zwei gleichzeitig erhaltenen Messwerten an einer festgestellten Schwelle heranreicht oder sie überschreitet.

2. Vorrichtung nach Anspruch 1, die mindestens einen Converter (12) enthält, zur Umsetzung in eine elektrische Grösse des Leckmesswert oder des Abstandes zwischen diesem Messwert und einem Referenzwert oder zwischen zwei gleichzeitig erhaltenen Messwerten.

3. Vorrichtung nach Anspruch 1, die eine mit zwei vom Draht (3) durchgedrungenen Röhren versehene, am Ausgang der Arbeitszone angeordnete Lecklehre (4) aufweist.

4. Vorrichtung nach Anspruch 3, worin die Injektioneinrichtungen (9) zum Spritzen der Flüssigkeit für ein Spritzen unter konstantem Durchfluss eingerichtet sind, wobei die Messmittel zum Mass der Lecken dieser Flüssigkeit aus einem Manometer (7) bestehen, zum Mass des in der Lecklehre (4) herrschenden Druckes.

5. Vorrichtung nach Anspruch 3, worin die Injektioneinrichtungen (18) zum Spritzen der Flüssigkeit für ein Spritzen unter konstantem Druck eingerichtet sind, wobei die Messmittel zum Mass der Lecken dieser Flüssigkeit aus einem Durchflussmeter (17) bestehen, zum Mass des Durchflusses der durch die Lecklehre (4) fliessenden Flüssigkeit.

6. Vorrichtung nach einem der Ansprüche 2 bis 5, die eine zweite, mit zwei vom Draht (3) durchgedrungenen Röhren (1, 2) versehene, am Eingang der Arbeitszone angeordnete Lecklehre (4) aufweist, sowie Injektioneinrichtungen (9) zum Spritzen einer unter Druck stehenden Flüssigkeit in diese zweite Lecklehre (4), Messmittel (27, 37) zum gleichzeitigen Mass der Flüssigkeitslecken in diesen beiden Lecklehren und einen zweiten, am Komparator (23) angeschalteten Converter.

7. Vorrichtung nach einem der Ansprüche 1 bis 6, worin das Rohr, der Ring, die kalibrierten Oeffnung oder der Taster am Ausgang der Arbeitszone einer mit einer Drahtelektrode arbeitenden Elektroerodierschneidmaschine und um diesen Draht herum oder beiderseits angeordnet ist.

8. Vorrichtung nach Anspruch 1, worin das ausgegebene Signal es ermöglicht, die Leistung der vom Impulsgenerator (14) der EDM Maschine erzeugten elektrischen Entladungen zu erniedrigen.

9. Vorrichtung nach Anspruch 1, worin das ausgegebene Signal es ermöglicht, auf der mechanischen Spannung oder der Ablaufgeswindigkeit des Drahtes, das heisst auf seiner Ablaufdauer in der Arbeitszone, zu wirken.

10. Vorrichtung nach Anspruch 8, worin das ausgegebene Signal es ermöglicht, die Frequenz oder die Stärke der vom Impulsgenerator (14) der EDM Maschine erzeugten elektrischen Entladungen zu erniedrigen.

11. Verfahren zum Vermeiden des Bruches eines sich zwischen zwei Führungsköpfen (8) ablaufenden, gespannten Metalldrahtes (3), indem seinen Verschleiss durch Folgen des zeitbedingten Wechsels seines Querschnittes, am Ausgang einer Arbeitszone, abgeschätzt wird, dadurch gekennzeichnet, dass
— der Draht durch mindestens ein Rohr (1, 2) oder mindestens einen mit Düsen versehener Ring oder zwischen mindestens zwei, beiderseits des Drahtes symmetrisch angeornete, kalibrierte Oeffnungen oder Taster durchläuft, die am Ausgang der Arbeitszone vorgesehen sind, sowie,
— die Lecken zwischen Draht und Rohr oder Ring, oder am Ausgang dieser kalibrierten Oeffnungen oder Taster, einer durch dieses Rohr, diesen Ring, diese Oeffnungen oder Taster unter Druck gespritzten Flüssigkeit gemessen werden,
— und dass, sobald dieser Leckmesswert oder der Abstand zwischen zwei gleichzeitig erhaltenen Leckmesswerten an einem Referenzwert heranreichen oder ihn überschreiten, somit anzeigend, dass die Querschnittsänderung des Drahtes und daher sein Verschleiss an einer festgestellten Schwelle heranreichen, der Wert mindestens eines Arbeitsparameters abgeändert wird.

12. Verfahren nach Anspruch 11, worin die Arbeitszone in einer Flüussigkeit eintaucht.

FIG.1a  FIG.1b

FIG.2

FIG. 4

**FIG.3**

**FIG.5**